# EUROPÄISCHE PATENTSCHRIFT

(11) **EP 1 421 452 B1**
(45) Veröffentlichungstag und Bekanntmachung des Hinweises auf die Patenterteilung: **27.12.2006**
(21) Anmeldenummer: 01274420.7
(22) Anmeldetag: 24.10.2001
(51) Int. Cl.: G05B 19/4103

(54) **ANORDNUNG ZUR ERZEUGUNG VON FÜHRUNGSGRÖSSEN FÜR REGELKREISE EINER NUMERISCH GESTEUERTEN MASCHINE**
ARRAY FOR GENERATING REFERENCE INPUT VARIABLES FOR REGULATING CIRCUITS OF A NUMERICALLY CONTROLLED MACHINE
DISPOSITIF DE PRODUCTION DE GRANDEURS DE REFERENCE POUR DES CIRCUITS DE REGULATION D'UNE MACHINE A COMMANDE NUMERIQUE

(30) Priorität: 11.08.2001 DE 10139638
(43) Veröffentlichungstag der Anmeldung: 26.05.2004
(73) Patentinhaber: Dr. Johannes Heidenhain GmbH, 83292 Traunreut (DE)
(72) Erfinder: KOHLER, Frieder, 83362 Lauter (DE); FAUSER, Matthias, 83355 Grabenstätt (DE)
(74) Vertreter: Hofmann, Ernst
(86) Internationale Anmeldenummer: PCT/EP2001/012270
(87) Internationale Veröffentlichungsnummer: WO 2003/014848

(56) Entgegenhaltungen:
- EP-A- 0 270 060
- EP-A- 0 864 952
- EP-A- 0 917 033
- WO-A-01/18622
- DE-A- 4 303 090
- JP-A- 6 180 606
- US-A- 4 603 286
- US-A- 4 772 831

## Beschreibung

Die vorliegende Erfindung betrifft eine Anordnung zur Erzeugung von Führungsgrößen für Regelkreise einer numerisch gesteuerten Maschine nach dem Oberbegriff des Anspruches 1.

In numerisch gesteuerten Werkzeugmaschinen oder Robotern erfolgt die Erzeugung von Sollwerten für Lage, Geschwindigkeit und Beschleunigung als Führungsgrößen für die Regelkreise der jeweiligen Antriebe üblicherweise in Interpolatoreinheiten, die den Regelkreisen vorgeordnet sind. Den Interpolatoreinheiten werden zu diesem Zweck die gewünschten geometrischen Achsbewegungsfunktionen und Geschwindigkeitsprofile eingangsseitig vorgegeben. Ausgangsseitig liefert die Interpolatoreinheit diskrete Folgen von Sollwerten bzw. Abtastwerten auf einer Bahnkurve. Die Sollwerte werden mit einer definierten, üblicherweise festen Interpolator-Abtastzeit T_{IPO} als Führungsgrößen an die nachgeordneten Regelkreise ausgegeben. Ferner werden die von der Interpolatoreinheit erzeugten Sollwerte vor der Übergabe an den Lageregelkreis noch in einem Sollwert-Filter gefiltert, in der Regel in Form einer digitalen Tiefpassfilterung, um damit eine Glättung der Bahnkurve zu erreichen.

Aus der internationalen Patentanmeldung WO 01/18622 der Anmelderin ist eine derartige, gattungsgemäße Anordnung bekannt. In dieser Anmeldung werden insbesondere Maßnahmen vorgeschlagen, wie mit möglichst geringem Rechenaufwand ein geeignetes Lagesollwert-Filter in Form eines FIR-Filters realisiert werden kann. Darüberhinaus ist in dieser Anmeldung noch offenbart, dass zur Erzeugung von Führungsgrößen im Zeitraster der Regelkreise eine Feininterpolatoreinheit zwischen dem Lagesollwert-Filter und den Regelkreisen, z.B. dem Lageregelkreis, anzuordnen ist. Mit Hilfe der Feininterpolatoreinheit wird die Interpolator-Abtastzeit T_{IPO}, die typischerweise im Bereich T_{IPO} = [1...6ms] liegt bzw. die Interpolator-Abtastrate, der Regelkreis-Abtastzeit T_{Ctrl} des nachgeordneten Regelkreises bzw. der Regelkreis-Abtastrate angepasst. Die Regelkreis-Abtastzeit T_{Ctrl} liegt etwa im Bereich T_{Ctrl} = [100...800µs] und ist damit deutlich kleiner als die Interpolator-Abtastzeit T_{IPO} bzw. die Regelkreis-Abtastrate ist deutlich größer als die Interpolator-Abtastrate. Details zur konkreten Ausbildung der Feininterpolatoreinheit sind dieser Druckschrift jedoch nicht zu entnehmen.

Eine ähnliche Architektur einer numerischen Steuerung wird darüberhinaus auch bereits in der Beschreibungseinleitung der DE 43 03 090 A1 offenbart; auch in dieser Druckschrift finden sich jedoch keine Hinweise, wie die Feininterpolator-Einheit geeignet auszubilden ist.

Üblicherweise erfolgt eine Anpassung der Interpolator-Abtastzeit T_{IPO} an die Regelkreis-Abtastzeit T_{Ctrl} des nachgeordneten Regelkreises durch sehr aufwendige Verfahren. Beispielsweise ist hierzu aus der EP 0 917 033 A2 bekannt, eine sog. polynomiale Interpolation oder aber eine Spline-Interpolation vorzunehmen. Neben dem enormen Rechenaufwand liefert diese Art der Feininterpolation jedoch auch resultierende Bahnkurven mit unerwünschten Überschwingern.

Desweiteren wird an dieser Stelle auch mit linearer Feininterpolation gearbeitet. Dieses Verfahren führt jedoch zu unerwünschten Anregungen der Antriebssysteme an den jeweiligen Segmentübergängen.

Aufgabe der vorliegenden Erfindung ist es daher, für eine gattungsgemäße Anordnung zur Erzeugung von Führungsgrößen für Regelkreise einer numerisch gesteuerten Maschine eine zweckmäige Realisierung einer Feininterpolatoreinheit anzugeben. Die Feininterpolatoreinheit soll hierbei die von einer Interpolatoreinheit mit einer bestimmten Interpolator-Abtastrate erzeugten Lagesollwerte derart verarbeiten, dass Führungsgrößen für nachgeordnete Regelkreise im Zeitraster der Regelkreis-Abtastrate resultieren. Gefordert ist neben einem möglichst geringen Rechenaufwand für die Feininterpolation eine möglichst gute Qualität der resultierenden Bahnkurven.

Diese Aufgabe wird gelöst durch eine Anordnung mit den kennzeichnenden Merkmalen des Anspruches 1.

Vorteilhafte Ausführungsformen der erfindungsgemäßen Anordnung ergeben sich aus den Maßnahmen, die in den von Anspruch 1 abhängigen Ansprüchen aufgeführt sind.

Erfindungsgemäß ist nunmehr vorgesehen, die Feininterpolatoreinheit mit Hilfe eines Abtastraten-Wandlers und eines nachgeordneten digitalen Filters zu realisieren. Besonders vorteilhaft erweist sich hierbei die Maßnahme, das digitale Filter als FIR-Filter auszubilden. Derart ist es möglich, die ablaufenden arithmetischen Operationen des Abtastraten-Wandlers und des FIR-Filters zusammenzufassen. Aufgrund des vom Abtastraten-Wandler vorgenommenen Einfügens von Zwischenwerten mit dem Wert Null im Zeitraster der Regelkreis-Abtastrate zwischen die eingangsseitigen Sollwerte, enthält der Eingangsvektor des FIR-Filters sehr viele Nullwerte. Jeder am FIR-Filtereingang anliegende Wert Null führt auf Seiten des FIR-Filters zu arithmetischen Operationen, deren Ausgangswert wiederum Null ist. Erfindungsgemäß wird nunmehr dieser Umstand ausgenutzt, d.h. es müssen die arithmetischen Operationen mit dem Eingangswert Null nicht durchgeführt zu werden. Es werden vielmehr für eine Folge von Eingenagswerten mit Hilfe mehrerer Filterkoeffizientensätze mehrere interpolierte Ausgangswerte berechnet, wobei die Anzahl hierzu erforderlicher Filterkoeffizientensätze dem gewünschten Interpolationsfaktor entspricht. Auf diese Art und Weise ist ein lediglich geringer Rechenaufwand auf Seiten der Feininterpolatoreinheit erforderlich.

Als weiterer Vorteil der erfindungsgemäßen Anordnung ist eine sehr gute Qualität der letztlich resultierenden Bahnkurve zu erwähnen. Grund hierfür ist, dass durch die gewählte Art der Feininterpolation eine nahezu exakte Rekonstruktion des Ausgangssignales möglich ist, sofern bei der Interpolation das Abtasttheorem nicht verletzt wurde.

Weitere Einzelheiten der vorliegenden Erfindung ergeben sich aus der nachfolgenden Beschreibung eines Ausführungsbeispieles anhand der beiliegenden Figuren.

Dabei zeigt
- Figur 1: ein schematisiertes Blockschaltbild eines Teiles einer numerischen Werkzeugmaschinensteuerung;
- Figur 2: ein schematisches Blockschaltbild eines Ausführungsbeispieles der erfindungsgemäßen Anordnung;
- Figur 3: eine schematisierte Darstellung des in der erfindungsgemäßen Anordnung in Fig. 2 eingesetzten digitalen FIR-Filters.

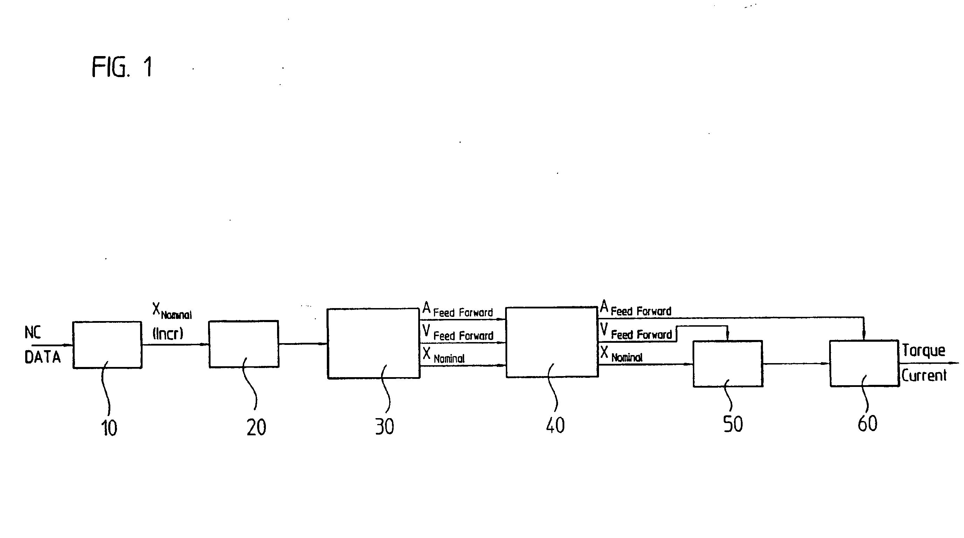

In Figur 1 ist in schematischer Form ein Teil einer numerischen Werkzeugmaschinensteuerung gezeigt, in der eine erfindungsgemäß ausgestaltete Feininterpolatoreinheit eingesetzt wird.

In der numerischen Werkzeugmaschinensteuerung werden zur Erzeugung der Werkzeug-Bahndaten die NC-Daten zunächst von einem Interpolator 10 in eine Folge von Lagesollwerten X_{nomnial,INCR} mit einer definierten Interpolator-Abtastrate bzw. Interpolator-Abtastzeit T_{IPO} umgesetzt. Üblicherweise liegt die Interpolator-Abtastzeit T_{IPO} hierbei in der Größenordnung T_{IPO} = [1ms....6ms]. Die Lagesollwerte Xₙₒₘᵢₙₐₗ werden nach der - nachfolgend zu beschreibenden - Weiterverarbeitung als Führungsgrößen Xₙₒₘᵢₙₐₗ, V_{Feedforwar} und A_{Feedforward} an Regelkreise 50, 60 in Form eines Lagereglers und eines Geschwindigkeitsreglers übergeben. Die Regelkreise 50, 60 weisen hierbei deutlich kleinere Abtastzeiten T_{Ctrl} in der Größenordnung T_{Ctrl} = [100µs....800µs] auf. Über die Regelkreise 50, 60 erfolgt im vorliegenden Beispiel letztlich in bekannter Art und Weise die Steuerung der Bewegung entlang der gewünschten Bahnkurve auf Basis der übergebenen Führungsgrößen.

Vor der Übergabe der NC-Daten an den Interpolator 10 erfolgt unter anderem eine Vorverarbeitung der NC-Daten dahingehend, dass ein geeigneter Bahngeschwindigkeitsverlauf unter Berücksichtgung verschiedener Randbedingungen ermittelt wird. Um hierbei insbesondere eine dynamische Überlastung des Antribessystemes zu vermeiden, wird bei der Vorverarbeitung der NC-Daten sichergestellt, dass physikalische Grenzen der Antriebssysteme durch die Führungsgrößen nicht überschritten werden. Letztlich resultiert hierbei eine Bandbegrenzung des Geschwindigkeitsprofiles, indem an kritischen Stellen im Bewegungsablauf eine zeitliche Streckung des Bewegungsablaufs erfolgt. In Bezug auf hierzu geeignete Verfahren sei an dieser Stelle auf Kap. 7 (S. 60 - 108) der Dissertation von M. Fauser, Steuerungstechnische Maßnahmen für die Hochgeschwindigkeits-Bearbeitung, Shaker-Verlag, Aachen, 1997 verwiesen.

Auf die Bedeutung dieser Maßnahme wird im Verlauf der folgenden Beschreibung noch näher eingegangen. Daraufhin werden die vom Interpolator 10 erzeugten Lagesollwerte Xₙₒₘᵢₙₐₗ, _{INCR} mittels eines als FIR-Filters ausgebildeten Lagesollwert-Filters 20 digital gefiltert, um sicherzustellen dass die an die Regelkreise 50, 60 übergebenen Führungsgrößen keine Frequenzanteile mehr aufweisen, die ggf. Maschinenresonanzen anregen könnten. Das an dieser Stelle eingesetzte digitale Filter 20 wirkt als Tiefpass-Filter, das Frequenzanteile bis zu einer Grenzfrequenz f_{G} durchlässt und Frequenzanteile ab der Grenzfrequenz f_{G} sperrt. Die Filter-Grenzfrequenz f_{G} wird hierbei in der Regel kleiner als die Resonanzfrequenz f_{Res} der Werkzeugmaschine gesetzt, f_{G} = f_{Res}. In Bezug auf das Lagesollwert-Filter 20 sei auf die bereits erwähnte WO 01/18622 verwiesen.

Die gefilterten Lagesollwerte X_{nominal, INCR} werden anschließend mit Hilfe der Feininterpolatoreinheit 30 weiterverarbeitet, wobei über die Feininterpolatoreinheit 30 im wesentlichen die Erzeugung von Führungsgrößen X_{nominal,} V_{Feedforward} und A_{Feedforward} für die nachgeordneten Regelkreise 50, 60 im Zeitraster der Regelkreise 50, 50 erfolgt bzw. die Erzeugung von Führungsgrößen mit der Regelkreis-Abtastrate erfolgt. Als Führungsgrößen seien hierbei die Sollwerte Xₙₒₘᵢₙₐₗ für den nachgeordneten Lageregelkreis 50 sowie die Vorsteuerwerte V_{Feedforward} und A_{Feedforward} für den Lageregelkreis 50 und Drehzahlregelkreis 60 bezeichnet. Die erfindungsgemäß ausgebildete Feininterpolatoreinheit 30 übernimmt demzufolge die Aufgabe, die niedrige Abtastrate des Interpolators 10 an die höhere Abtastrate der Regelkreise 50, 60 anzupassen; das Verhältnis aus Interpolator-Abtastrate und Regelkreis-Abtastrate sei hierbei nachfolgend als Interpolationsfaktor bezeichnet. Üblicherweise erfolgt hierbei eine Erhöhung der Interpolator-Abtastrate um den Interpolationsfaktor IF auf die Regelkreis-Abtastrate. Typische Interpolationsfaktoren IF liegen z.B. im Bereich IF = [2...60].

Die Interpolator-Abtastrate wird hierbei auch deshalb nicht so hoch gewählt wie die Regelkreis-Abtastrate, da wie aus der WO 01/18622 der Anmelderin bekannt, die Wahl der Interpolator-Abtastrate unter Berücksichtigung bzw. in Abhängigkeit der jeweiligen maschinenspezifischen Resonanzfrequenz f_{Res} eine einfachere Realisierung des FIR-Filters 20 ermöglicht. Bei üblichen Resonanfrequenzen im Bereich f_{Res} = [20Hz....100Hz] resultieren die oben angegebenen typischen Interpolator-Abtastzeiten T_{IPO} = [1msec....6msec].

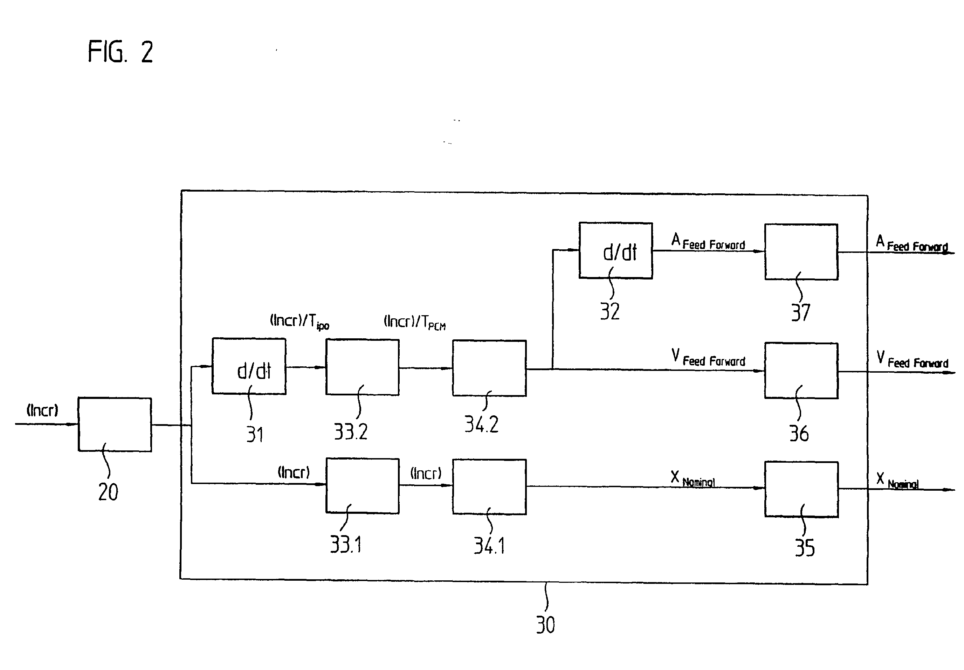

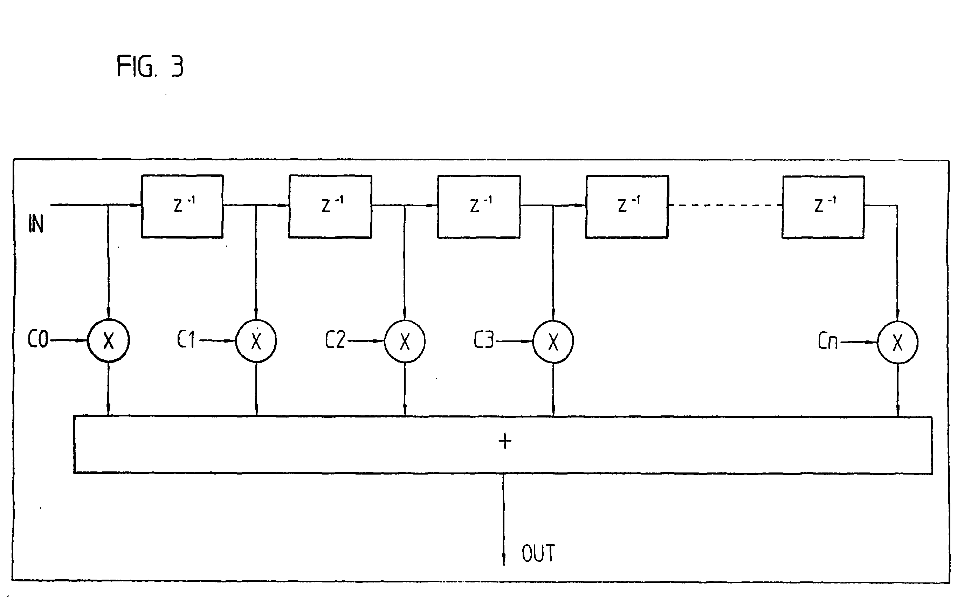

In Bezug auf die konkrete, erfindungsgemäße Ausbildung der Feininterpolatoreinheit 30 sei auf die nachfolgende Beschreibung der Figuren 2 und 3 verwiesen.

Im Beispiel der Figur 1 ist zwischen der Feininterpolatoreinheit 30 und den Regelkreisen 50, 60 desweiteren noch eine Synchronisationseinheit 40 angeordnet. Die Aufgabe der Synchronisationseinheit 40 besteht hierbei in der zeitlichen Synchronisation der verschiedenen erzeugten Führungsgrößen X_{Nominal}, V_{Feedforward}, A_{Feedforward} für unterschiedliche Maschinenachsen. Eine derartige Synchronisation ist in einer mehrachsigen Werkzeugmaschine erforderlich, da die von der Feininterpolatoreinheit übergebenen Führungsgrößen X_{Nominal}, V_{Feedforward}, A_{Feedforward} auf einen anderen Zeitpunkt bezogen sind, als diese in den nachgeordneten Regelkreisen 50, 60 benötigt werden; insbesondere wenn etwa die Regelung verschiedener Achsen sequentiell erfolgt. Es ist daher über die Synchronisationseinheit 30 eine geeignete Verzögerung der an die Regelkreise übergebenen Führungsgrößen X_{Nominal}, V_{Feedforward}, A_{Feedforward} für die verschiedenen Achsen vorzunehmen.

Der prinzipielle Aufbau eines Ausführungsbeispiels der Feininterpolatoreinheit 30 ist in Figur 2 schematisch dargestellt. Die Feininterpolatoreinheit 30 wird hierbei vorzugsweise auf einem digitalen Signalprozessor (DSP) realisiert, dessen Architektur zur Berechnung von digitalen Filtern optimiert ist. Alternativ hierzu ist auch die Realisierung auf einer CPU möglich.

Im dargestellten Beispiel weist die Feininterpolatoreinheit 30 zwei Bearbeitungskanäle auf, in denen die Führungsgrößen X_{Nominal}, V_{Feedforward} bzgl. Lage und Geschwindigkeit für die nachgeordneten Lage- und Geschwindigkeits-Regelkreise erzeugt werden. Aus dem Bearbeitungskanal zur Erzeugung der geschwindigkeitsbezogenen Führungsgröße V_{Nominal} wird desweiteren durch Differentiation über das Differenzierglied 32 auch die beschleunigungsbezogene Führungsgröße A_{Feedforward} abgeleitet. Es sei an dieser Stelle jedoch betont, dass es alternativ hierzu möglich wäre, die Feininterpolatoreinheit 30 lediglich einkanalig auszubilden und die Führungsgrößen V_{Feedforward}, A_{Feedforward} bzgl. Geschwindigkeit und Beschleunigung durch ein- bzw. zweimaliges Differenzieren aus den Lage-Sollwerten X_{Nominal} abzuleiten.

Mit Ausnahme des Differenziergliedes 31 weisen die beiden Verarbeitungskanäle der Feininterpolatoreinheit 30 den prinzipiell identischen Aufbau auf, der nachfolgend erläuert sei. So umfasst jeder der beiden Verarbeitungskanäle der Feininterpolatoreinheit 30 je einen Abtastraten-Wandler 33.1, 33.2 sowie ein nachgeordnetes digitales Filter 34.1, 34.2. Mit Hilfe des Abtastraten-Wandlers 33.1, 33.2 sowie des digitalen Filters 34.1, 34.2 erfolgt jeweils die oben erwähnte Anpassung der niedrigen Interpolator-Abtastrate an die deutlich höhere Regelkreis-Abtastrate.

Über den Abtastraten-Wandler 33.1, 33.2 wird zunächst die Abtastrate der eingangsseitigen Sollwerte von der Interpolator-Abtastrate auf die Regelkreis-Abtastrate erhöht. Hierzu werden vom Abtastraten-Wandler 33.1, 33.2 in das Zeitraster der eingangsseitigen Sollwerte Zwischenwerte mit dem Wert Null im Zeitraster der Regelkreis-Abtastrate eingefügt. Am Ausgang des Abtastraten-Wandlers 33.1, 33.2 liegt in den beiden Verarbeitungskanälen demzufolge jeweils ein Signal mit der gewünschten bzw. erforderlichen Abtastrate des nachgeordneten Regelkreises vor, das zur Glättung bzw. zur Eliminierung unerwünschter Frequenzkomponenten anschließend jeweils dem digitalen Filter 34.1, 34.2 zugeführt wird.

Das digitale Filter 34.1, 34.2 wiederum ist als FIR-Filter ausgebildet, dem verschiedene Filterkoeffizientensätze zugeordnet sind. Beispielsweise können die verschiedenen Filterkoeffizientensätze in einer Speichereinheit abgelegt werden, die dem FIR-Filter zugeordnet ist. Im FIR-Filter erfolgt nunmehr jeweils eine Berechnung mehrerer Ausgangswerte für eine bestimmte Folge von Eingangswerten, indem die jeweilige Folge von Eingangswerten unter Verwendung der verschiedenen Filterkoeffizientensätze gefiltert wird.

Am Ausgang der FIR-Filter 34.1, 34.2 liegen dann jeweils die gewünschten Signale mit den erhöhten Abtastraten respektive den Regelkreis-Abtastraten vor, die schließlich als Sollwert bzw. Führungsgrößen X_{Nominal,} V_{Feedforward}, A_{Feedforward} an die entsprechenden nachgeordneten Regelkreise übergeben werden.

Aufgrund der erfindungsgemäßen Ausgestaltung der Feininterpolatoreinheit 30 resultiert neben einer sehr guten Qualität der erzeugten Bahnkurve desweiteren auch eine lediglich geringer Rechenaufwand. Dies wird insbesondere durch die Ausbildung des bzw. der digitalen Filter 34.1, 34.2 als FIR-Filter sichergestellt. Dadurch ist es möglich, die arithmetischen Operationen des bzw. der Abtastraten-Wandler 33.1, 33.2 und des FIR-Filters zusammenzufassen. Aufgrund des vom Abtastraten-Wandler 33.1, 33.2 vorgenommenen Einfügens von Zwischenwerten mit dem Wert Null im Zeitraster der Regelkreis-Abtastrate zwischen die eingangsseitigen Sollwerte enthält der Eingangsvektor des FIR-Filters 34.1, 34.2 sehr viele Nullwerte. Jeder am FIR-Filtereingang anliegende Wert Null führt auf Seiten des FIR-Filters 34.1, 34.2 zu arithmetischen Operationen, deren Ausgangswert wiederum Null ist. Erfindungsgemäß wird nunmehr dieser Umstand ausgenutzt, d.h. es müssen die arithmetischen Operationen mit dem Eingangswert Null nicht durchgeführt zu werden. Es werden vielmehr für eine bestimmte Folge von Eingangswerten mit Hilfe mehrerer Filterkoeffizientensätze mehrere interpolierte Ausgangswerte bzw. Zwischenwerte berechnet, wobei die Anzahl hierzu erforderlicher Filterkoeffizientensätze dem gewünschten Interpolationsfaktor IF entspricht. Jeder der verwendeten Filterkoeffizientensätze besitzt den gleichen Amplitudengang; demgegenüber variiert aber der Phasengang bzw. die Gruppenlaufzeit als Ableitung des Phasenganges von Filterkoeffizientensatz zu Filterkoeffizientensatz um eine Abtastperiode der Regelkreis-Abtastrate. Es resultieren ausgangsseitig die Zwischenwerte im erforderlichen Abtastraster.

Um diese Art der Feininterpolation in Form einer digitalen Filterung vomehmen zu können, ist die bereits oben erwähnte Vorverarbeitung der NC-Daten in Form einer Bandbegrenzung der Signale erforderlich, die an das Lagesollwert-Filter 20 und anschließend an die Feininterpolatoreinheit 30 übergeben werden. Erst eine derartige Bandbegrenzung ermöglicht letztlich die erfindungsgemäße digitale Filterung in der Feininterpolatoreinheit 30; ansonsten würden durch die Filterung unerwünschte Aliasing-Effekte zur Verfälschung des feininterpolierten Signalverlaufes führen.

Bei der Übergabe der von der Feininterpolatoreinheit 30 erzeugten Führungsgrößen X_{Nominal}, V_{Feedforward}, A_{Feedforward} an die verschiedenen Regelkreise muss nunmehr noch sichergestellt werden, dass die verschiedenen Führungsgrößen X_{Nominal}, V_{Feedforward} , A_{Feedforward} jeweils allesamt auf den gleichen Zeitpunkt bzw. die gleiche Zeitbasis bezogen sind. Dies wird durch ausgangsseitige Kompensationsglieder 35, 36, 37 in der Feininterpolatoreinheit 30 erreicht, die jeweils eine bestimmte Totzeit in den Verarbeitungskanälen verursachen und letztlich die gleiche Zeitbasis für die erzeugten Führungsgrößen X_{Nominal}, V_{Feedforward}, A_{Feedforward} gewährleisten.

Derartige Kompensationsglieder können im übrigen auch in einer einkanaligen Ausbildung der Feininterpolatoreinheit vorgesehen werden, um den Bezug der erzeugten Führungsgrößen auf die gleiche Zeitbasis sicherzustellen.

Eine schematische Darstellung des digitalen Filters 34.1, 34.2 der Feininterpolatoreinheit 30 ist schließlich in Figur 3 dargestellt. Wie aus Figur 3 erkennbar, entspricht das verwendete FIR-Filter üblicherweise bekannten FIR-Filterstrukturen.

Neben dem erläuterten Ausführungsbeispiel gibt es selbstverständlich noch alternative Möglichkeiten, die erfindungsgemäße Anordnung auszubilden.

## Patentansprüche

1. Anordnung zur Erzeugung von Führungsgrößen für Regelkreise einer numerisch gesteuerten Maschine, bestehend aus einer Interpolatoreinheit (10) zur Vorgabe von Lagesollwerten mit einer bestimmten Interpolator-Abtastrate und einer der Interpolatoreinheit nachgeordneten Feininterpolatoreinheit (30), die aus eingangsseitigen Lagesollwerten ausgangsseitige Führungsgrößen für ein oder mehrere nachgeordnete Regelkreise erzeugt, wobei die Feininterpolatoreinheit die Führungsgrößen im Zeitraster der Regelkreise mit der Regelkreis-Abtastrate erzeugt,
**dadurch gekennzeichnet, dass**
die Feininterpolatoreinheit (30) einen Abtastraten-Wandier (33.1, 33.2) sowie ein nachgeordnetes digitales Tiefpassfilter (34.1, 34.2) umfasst, wobei der Abtastraten-Wandler (33.1, 33.2) die Interpolator-Abtastrate der eingangsseitigen Signale um einen bestimmten Interpolationsfaktor auf die Regelkreis-Abtastrate erhöht.

2. Anordnung nach Anspruch 1, **dadurch gekennzeichnet, dass** das digitale Tiefpassfilter (34.1, 34.2) als FIR-Filter ausgebildet ist.

3. Anordnung nach Anspruch 2, **dadurch gekennzeichnet, dass** dem FIR-Filter verschiedene Filterkoeffizientensätze zugeordnet sind.

4. Anordnung nach Anspruch 1 und 3, **dadurch gekennzeichnet, dass** die Anzahl der Filterkoeffizientensätze dem Interpolationsfaktor entspricht.

5. Anordnung , nach Anspruch 1, **dadurch gekennzeichnet, dass** die Interpolator-Abtastrate (T_{IPO}) in Abhängigkeit einer maschinenspezifischen Resonanzfrequenz gewählt ist.

6. Anordnung nach Anspruch 1, **dadurch gekennzeichnet, dass** das der Interpolatoreinheit (20) zugeführte Signal bandbegrenzt ist.

7. Anordnung nach Anspruch 1, **dadurch gekennzeichnet, dass** die Feininterpolatoreinheit (30) auf einem digitalen Signalprozessor oder auf einer CPU ausgebildet ist.

8. Anordnung nach Anspruch 1, **dadurch gekennzeichnet, dass** die Feininterpolatoreinheit (30) mindestens zwei parallele Verarbeitungskanäle umfasst, in denen jeweils Führungsgrößen (X_{Nominal}, V_{Feedforward}, A_{Feedforward}) für Lage und Geschwindigkeit erzeugbar sind, die von nachgeordneten Lage- und Geschwindigkeitsregelkreisen (50, 60) verarbeitbar sind und wobei jeder der Verarbeitungskanäle einen Abtastraten-Wandler (33.1, 33.2) sowie ein nachgeordnetes digitales Tiefpassfilter (34.1, 34.2) umfasst.

9. Anordnung nach Anspruch 1 oder 8, **dadurch gekennzeichnet, dass** in der Feininterpolatoreinheit (30) jeweils ein oder mehrere Verzögerungsglieder (35, 36, 37) angeordnet sind, die sicherstellen, dass die an den Lageregelkreis (50) und den Geschwindigkeitsregelkreis (60) übergebenen Führungsgrößen (X_{Nominal}, V_{Feedforward}, A_{Feedforward}) für Lage und Geschwindigkeit jeweils auf eine definierte Zeitbasis bezogen sind.

10. Anordnung nach Anspruch 1, **dadurch gekennzeichnet, dass** zwischen der Feininterpolatoreinheit (30) und den nachgeordneten Regelkreisen (50, 60) ferner eine Synchronisationseinheit (40) angeordnet ist, die eine zeitliche Synchronisation der erzeugten Führungsgrößen (X_{Nominal}, V_{Feedfoward}, A_{Feedforward}) für verschiedene Maschinenachsen vornimmt.

## Claims

1. Array for generating reference input variables for regulating circuits of a numerically controlled machine, comprising an interpolator unit (10) for prescribing positional nominal values with a specific interpolator sampling rate and a fine interpolator (30) unit which is disposed subsequently to the interpolator unit and generates, from input-side positional nominal values, output-side reference variables for one or more subsequently disposed regulating circuits, the fine interpolator unit generating the reference variables in the time grid of the regulating circuits with the regulating circuit sampling rate,
**characterised in that**
the fine interpolator unit (30) includes a sampling rate converter (33.1, 33.2) and a subsequently disposed digital low-pass filter (34.1, 34.2), the sampling rate converter (33.1, 33.2) increasing the interpolator sampling rate of the input-side signals by a specific interpolation factor to the regulating circuit sampling rate.

2. Array according to claim 1, **characterised in that** the digital low-pass filter (34.1, 34.2) is configured as an FIR filter.

3. Array according to claim 2, **characterised in that** different filter coefficient sets are associated with the FIR filter.

4. Array according to claim 1 and 3, **characterised in that** the number of filter coefficient sets corresponds to the interpolation factor.

5. Array according to claim 1, **characterised in that** the interpolator sampling rate (T_{IPO}) is chosen as a function of a machine-specific resonance frequency.

6. Array according to claim 1, **characterised in that** the signal supplied to the interpolator unit (20) is band-restricted.

7. Array according to claim 1, **characterised in that** the fine interpolator unit (30) is configured on a digital signal processor or on a CPU.

8. Array according to claim 1, **characterised in that** the fine interpolator unit (30) includes at least two parallel processing channels in which respectively reference variables (X_{Nominal,} V_{Feedforward}, A_{Feedforward}) for position and speed can be generated, which can be processed by subsequently disposed position and speed regulating circuits (50, 60) and each of the processing channels including a sampling rate converter (33.1, 33.2) and a subsequently disposed digital low-pass filter (34.1, 34.2).

9. Array according to claim 1 or 8, **characterised in that**, in the fine interpolator unit (30), respectively one or more delay elements (35, 36, 37) are disposed which ensure that the reference variables (X_{Nominal}, V_{Feedforward}, A_{Feedforward}) for position and speed transferred to the position regulating circuit (50) and to the speed regulating circuit (60) are related respectively to a defined time basis.

10. Array according to claim 1, **characterised in that**, between the fine interpolator unit (30) and the subsequently disposed regulating circuits (50, 60), in addition a synchronising unit (40) is disposed which undertakes a temporal synchronisation of the generated reference variables (X_{Nominal}, V_{Feedforward}, A_{Feedforward}) for different machine axes.

## Revendications

1. Dispositif de génération de grandeurs de référence pour des circuits de régulation d'une machine à commande numérique, constitué d'une unité d'interpolation (10), destinée à prédéfinir des valeurs de position de consigne avec un taux d'échantillonnage d'interpolateur déterminé, et d'une unité d'interpolation de précision (30) qui est disposée à la suite de l'unité d'interpolation et, à partir de valeurs de position de consigne d'entrée, génère à la sortie des grandeurs de référence pour un ou plusieurs circuits de régulation installé(s) à la suite, l'unité d'interpolation de précision générant les grandeurs de référence à l'intérieur de la trame de temps des circuits de régulation, avec le taux d'échantillonnage des circuits de régulation, **caractérisé en ce que** l'unité d'interpolation de précision (30) comprend un convertisseur de taux d'échantillonnage (33.1, 33.2) ainsi qu'un filtre passe-bas (34.1, 34.2) numérique disposé à la suite, le convertisseur de taux d'échantillonnage (33.1, 33.2) augmentant le taux d'échantillonnage d'interpolateur des signaux côté entrée d'un coefficient d'interpolation déterminé pour atteindre le taux d'échantillonnage des circuits de régulation.

2. Dispositif selon la revendication 1, **caractérisé en ce que** le filtre passe-bas (34.1, 34.2) numérique est réalisé sous forme de filtre FIR.

3. Dispositif selon la revendication 2, **caractérisé en ce que** plusieurs ensembles de coefficient de filtre sont associés au filtre FIR.

4. Dispositif selon les revendications 1 et 3, **caractérisé en ce que** le nombre d'ensembles de coefficients de filtre correspond au facteur d'interpolation.

5. Dispositif selon la revendication 1, **caractérisé en ce que** le taux d'échantillonnage d'interpolateur (T_{IPO}) est choisi en fonction d'une fréquence de résonance spécifique à la machine.

6. Dispositif selon la revendication 1, **caractérisé en ce que** le signal transmis à l'unité d'interpolation (20) est limité au niveau de la bande.

7. Dispositif selon la revendication 1, **caractérisé en ce que** l'unité d'interpolation de précision (30) est réalisée sur un processeur de signaux numérique ou sur une unité centrale (CPU).

8. Dispositif selon la revendication 1, **caractérisé en ce que** l'unité d'interpolation de précision (30) comprend au moins deux canaux de traitement parallèles, dans lesquels peuvent être générées respectivement des grandeurs de référence (X_{Nominal}, V_{Feedforward}, A_{Feedforward}) pour la position et la vitesse, qui peuvent être traitées par des circuits de régulation de position et de vitesse (50, 60) disposés à la suite, chacun des canaux de traitement comprenant un convertisseur de taux d'échantillonnage (33.1, 33.2) ainsi qu'un filtre passe-bas (34.1, 34.2) numérique disposé à la suite.

9. Dispositif selon la revendication 1 ou 8, **caractérisé en ce que** dans l'unité d'interpolation de précision (30), il est prévu respectivement un ou plusieurs éléments de temporisation (35, 36, 37) qui garantissent que les grandeurs de référence (X_{Nominal}, V_{Feedforward}, A_{Feedforward}) pour la position et la vitesse, qui sont transmises au circuit de régulation de position (50) et au circuit de régulation de vitesse (60), se rapportent respectivement à une base de temps définie.

10. Dispositif selon la revendication 1, **caractérisé en ce qu'**il est prévu, en outre, entre l'unité d'interpolation de précision (30) et les circuits de régulation (50, 60) installés à la suite, une unité de synchronisation (40) qui réalise une synchronisation dans le temps des grandeurs de référence (X_{Nominal}, V_{Feedforward}, A_{Feedforward}) générées, pour différents axes de machine.
